# EUROPÄISCHE PATENTANMELDUNG

(11) **EP 1 241 392 A1**
(43) Veröffentlichungstag der Anmeldung: **18.09.2002**
(21) Anmeldenummer: 02003962.4
(22) Anmeldetag: 22.02.2002
(51) Int. Cl.: F16L 41/08

(54) **Rohranschlusseinrichtung**

(30) Priorität: 13.03.2001 DE 10111931
(71) Anmelder: Eaton Fluid Power GmbH, 76532 Baden-Baden (DE)
(72) Erfinder: Hilgert, Andreas Richard, 76547 Sinzheim (DE); Schneider, Axel, 76547 Sinzheim (DE)
(74) Vertreter: Patentanwälte Rüger, Barthelt & Abel

(57) **Zusammenfassung**

Die erfindungsgemäße Rohranschlusseinrichtung (1) weist einen an einem Rohr (3) anzubringenden Anschlussstutzen (4) auf. Der Anschlussstutzen (4) durchsetzt eine Lageröffnung (31) die in einem Halter (5) ausgebildet ist. Der Halter (5) ist mittels zweier Halteschenkel (18, 19) mit dem Rohr (3) verbunden und dient dazu, die Verbindung zwischen dem Anschlussstutzen (4) und dem Rohr (3) insbesondere hinsichtlich aller quer zu dem Anschlussstutzen (4) angreifenden Kräfte zu entlasten.

Eine solche Rohranschlusseinrichtung (1) ist vielseitig anwendbar. Insbesondere ist sie auch dann anwendbar, wenn die so verbundenen Rohre oder Leitungen mechanisch bewegt werden oder anderweitigen mechanischen Belastungen unterliegen.

## Beschreibung

Die Erfindung betrifft eine Rohranschlusseinrichtung, insbesondere zum Anschluss einer Leitung an ein fluidführendes Rohr.

Zum Anschließen von Leitungen an Rohre oder anderweitige fluidführende Behälter, ist aus dem Gebrauchsmuster DE 296 22 536 ein Anschlussstutzen bekannt, der an einem Ende einen rohrförmigen Zapfen aufweist. Dieser ist aus einem deformierbaren Material ausgebildet. Die den Zapfen durchsetzende Durchgangsöffnung verjüngt sich zu dem freien Ende des Zapfens hin, so dass die radiale Aufweitung des Zapfens durch einen entsprechenden Dorn bewirkt werden kann. Zum Anschluss eines Rohrs oder eines anderweitigen Verbindungsgegenstücks ist der Zapfen durch eine Wandungsöffnung des entsprechenden Verbindungsgegenstücks zu stecken und dann aufzuweiten.

Zur Abdichtung der auf diese Weise mechanisch gesicherten Verbindung dient ein O-Ring, der in einer den Zapfen umgebenden Ringnut untergebracht ist.

Derartige Anschlussstutzen gestatten eine rationelle und dauerhafte Herstellung von Rohranschlüssen. Gelegentlich stellt sich jedoch heraus, dass die Verbindung im Hinblick auf Biegebeanspruchung kritisch ist.

Davon ausgehend ist es Aufgabe der Erfindung, den Anwendungsbereich solcher Anschlussstutzen zu erweitern.

Diese Aufgabe wird mit der Rohranschlusseinrichtung gemäß Anspruch 1 gelöst. Außerdem trägt das Verfahren gemäß Anspruch 14 zur Lösung der Aufgabe bei.

Die erfindungsgemäße Rohranschlusseinrichtung beinhaltet außer dem an ein Rohr oder einen ähnlichen Kanal anzuschließenden Anschlussstutzen einen Halter zur mechanischen Abstützung des Anschlussstutzens. Der Halter weist zwei Halteschenkel auf, die dazu eingerichtet sind, mit dem Rohr verbunden zu werden. Dazu sind die Halteschenkel mit Haltemitteln versehen. Insbesondere wirken die Haltemittel so, dass der Halter bezügl. der Umfangsrichtung des Rohrs arretiert ist. Der Halter weist eine Lageröffnung für den Anschlussstutzen auf. Der an der Wandung der Lageröffnung anliegende Anschlussstutzen stützt sich dabei an dem Halter ab. Seitlich auf den Anschlussstutzen einwirkende Belastungen wirken somit nicht mehr auf die Verbindungsstelle zwischen dem Anschlussstutzen und dem Rohr ein, sondern werden von dem Halter auf die Rohrwand übertragen. Auf diese Weise können zum Anschluss des Anschlussstutzens an das Rohr auch Verbindungstechnologien und Verbindungsmittel genutzt werden, die relativ empfindlich gegen Biegebelastung sind. Biegebelastungen werden durch den Halter von der betreffenden Verbindung fern gehalten und können somit weder den mechanischen Sitz noch die Dichtigkeit der Verbindung beeinträchtigen.

Die zur Lagerung bzw. zur Befestigung des Halters an dem Rohr dienenden Haltemittel sind bei einer ersten bevorzugten Ausführungsform formschlüssig wirkende Haltemittel, beispielsweise in Form von Rastmitteln. Diese können in Form eines oder mehrerer Zähne bzw. zahnförmiger, sich parallel zu dem anzuschließenden Rohr erstreckender Rippen ausgebildet sein, die an der Innenseite jedes Schenkels ausgebildet sind. Insbesondere sind sie in der Nähe des freien Endes des Schenkels angeordnet. Beim Anschluss von Rohren mit einkerbbarer Oberfläche, wie beispielsweise kunststoffummantelten Rohren, Kunststoffschläuchen, elastomerummantelten Schläuchen oder Rohren oder ähnlichen Leitungen, können sich die Rastrippen oder anderweitige Rastvorsprünge in die Oberfläche des betreffenden Rohrs eingraben und somit eine formschlüssige Befestigung des Halters bewirken. Die Rastrippen oder Rastzähne sind dabei vorzugsweise so ausgebildet, dass sie ein leichtes Aufschieben des Halters auf das Rohr gestatten, ein Abziehen von dem Rohr jedoch verhindern. Dazu können die Rastzähne in Aufschieberichtung eine Schrägfläche und gegen die Aufschieberichtung eine quer dazu orientierte Fläche aufweisen.

Das Haltemittel kann auch ein stoffschlüssiges Haltemittel, beispielsweise in Form eines Haftstoffs oder eines Klebstoffs, sein. Dazu können die Halteschenkel an ihren Innenseiten mit Haftstoff oder Klebstoff beschichtet sein, oder mit entsprechenden Klebebändern versehen sein. Dies hat insbesondere bei Anwendung kurzer Schenkel Bedeutung, die das Rohr oder den Schlauch nicht umgreifen. Sind die Haltemittel hingegen als Rastmittel ausgebildet, die sich zum Beispiel mit Schneidkanten in die Außenseite des Rohrs oder Schlauchs einschneiden, wird es als vorteilhaft angesehen, sie wenigstens so lang auszubilden, dass sie das Rohr umgreifen. Dies gelingt, wenn die Länge der Rastschenkel größer ist als der Radius des Aufnahmeraums. Je weiter die Rastschenkel das Rohr hintergreifen, desto elastischer sind sie ausgebildet. Dazu ist es bei einer bevorzugten Ausführungsform vorgesehen, dass sich die Rastschenkel zu ihrem freien Ende hin verjüngen.

Hinsichtlich der Gestaltung der Lageröffnung bestehen mehrere Möglichkeiten. Bei einer einfachen und zweckmäßigen Ausführungsform stimmt der Querschnitt der Lageröffnung mit dem Querschnitt des Anschlussstutzens überein, so dass der Anschlussstutzen flächig an der Wandung der Lageröffnung anliegt. Hier wird eine Anlage im Presssitz bevorzugt, so dass der Anschlussstutzen in der Lageröffnung kein Spiel aufweist. Auf den Anschlussstutzen einwirkende Kräfte werden somit sofort und unmittelbar auf den Halter übertragen ohne zuvor die Verbindung zu dem Rohr schädigen zu können.

Es ist jedoch auch möglich, die Lageröffnung so zu gestalten, dass der Anschlussstutzen nur an voneinander beabstandeten Bereichen mit der Wandung in Anlage kommt. Dies hat den erheblichen Vorteil, dass höhere Fertigungstoleranzen verkraftet werden können. Ist die Lageröffnung beispielsweise im Querschnitt vier- oder mehreckig und der Anschlussstutzen rund, kommt lediglich eine streifenförmige Anlage zwischen der Außenfläche des Anschlussstutzens und der Wandung der Lageröffnung zustande. In diesen streifenförmigen Anlagebereichen entsteht eine höhere Flächenpressung als bei vollflächiger Anlage, so dass auch größere Materialdeformierungen an dem Anschlussstutzen und/oder dem Halter möglich sind, die dann den Toleranzausgleich in Folge von lokalen Deformationen ermöglichen. Es ist darüber hinaus möglich, die lediglich bereichsweise Anlage dadurch hervorzurufen, dass die Wandung der Lageröffnung mit Rippen oder anderweitigen Vorsprüngen versehen wird. Bei einer abgewandelten Ausführungsform können diese so gestaltet sein, dass beim Einschieben des Anschlussstutzens in den Halter ein Aufweiten der Lageröffnung erfolgt. Das Aufweiten der Lageröffnung kann dazu umgesetzt werden, die Schenkel gegeneinander zu spannen.

Der Halter ist vorzugsweise aus einem deformierbaren Material, wie beispielsweise Kunststoff oder einem ähnlichen Material, hergestellt. Er kann in Spritzgusstechnik produziert werden. Dies gilt insbesondere für die Ausführungsformen, die durch die Nachgiebigkeit des Materials oder unterstützt durch die Formgebung des Materials einen Toleranzausgleich zulassen.

Als Anschlussstutzen werden insbesondere solche Anschlussstutzen als zweckmäßig angesehen, die sich an einer nicht weiter vorbereiteten Wandungsöffnung des Rohrs befestigen lassen. Beispielsweise kann hier ein Anschlussstutzen mit einem aufspreizbaren rohrförmigen Zapfen Anwendung finden.

Bei dem erfindungsgemäßen Verfahren wird der Anschlussstutzen in die Lageröffnung des zuvor an dem Rohr befestigen Halters eingepresst. Damit wird zugleich die Verbindung des Anschlussstutzens mit dem Rohr vorbereitet. Erfolgt diese nachher beispielsweise durch Aufweitung des Zapfens und ist der Halter formschlüssig mit dem Rohr verbunden, kann die gesamte Montage als reine mechanische Montage ohne jeglichen Löt- oder Schweißvorgang auf sehr rationelle Weise erzielt werden. Die Anschlussöffnung in der Rohrwand kann vor oder nach dem Anbringen des Halters an dem Rohr ausgebildet werden.

Vorteilhafte Einzelheiten von Ausführungsformen der Erfindung lassen sich der Zeichnung oder der zugehörigen Beschreibung oder Unteransprüchen entnehmen.

In der Zeichnung sind Ausführungsbeispiele der Erfindung veranschaulicht. Es zeigen:
- Figur 1: ein Rohr mit einer daran vorgesehenen Rohranschlusseinrichtung in perspektivischer Darstellung,
- Figur 2: die Rohranschlusseinrichtung in quergeschnittener Darstellung,
- Figur 3: die Rohranschlusseinrichtung nach Figur 1 und 2 in Draufsicht,
- Figur 4: einen Anschlussstutzen nach Ansetzen an eine Rohrwand und nach Verbindung mit derselben in längsgeschnittener Darstellung,
- Figur 5-7: abgewandelte Ausführungsformen eines Anschlussstutzens,
- Figur 8: eine Rohranschlusseinrichtung mit nichtkreisförmiger Lageröffnung in Draufsicht,
- Figur 9: eine abgewandelte Ausführungsform der Lagereinrichtung in Draufsicht und
- Figur 10: eine weiter abgewandelte Ausführungsform der Anschlusseinrichtung in quergeschnittener Darstellung.

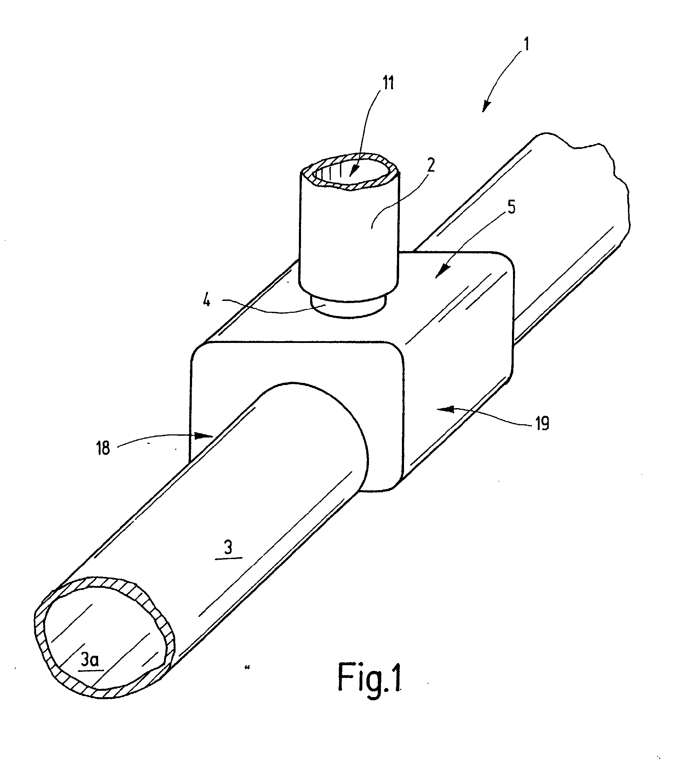

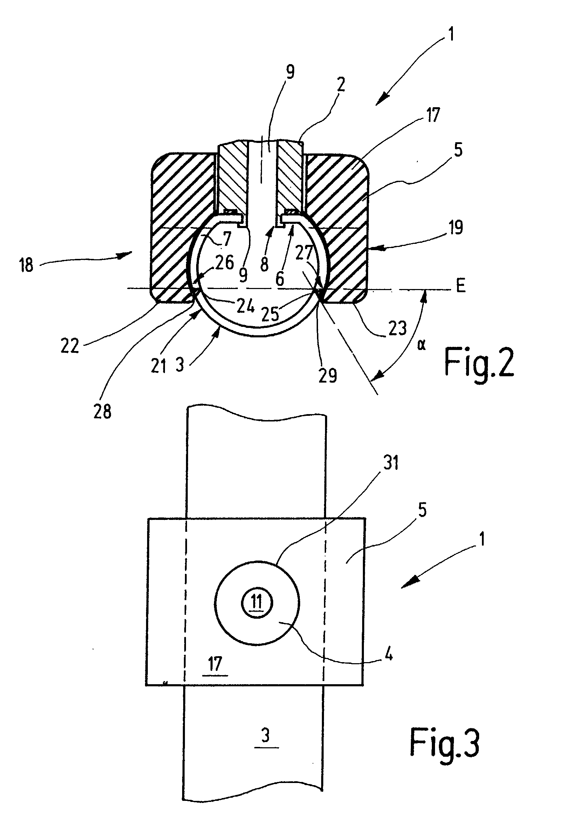

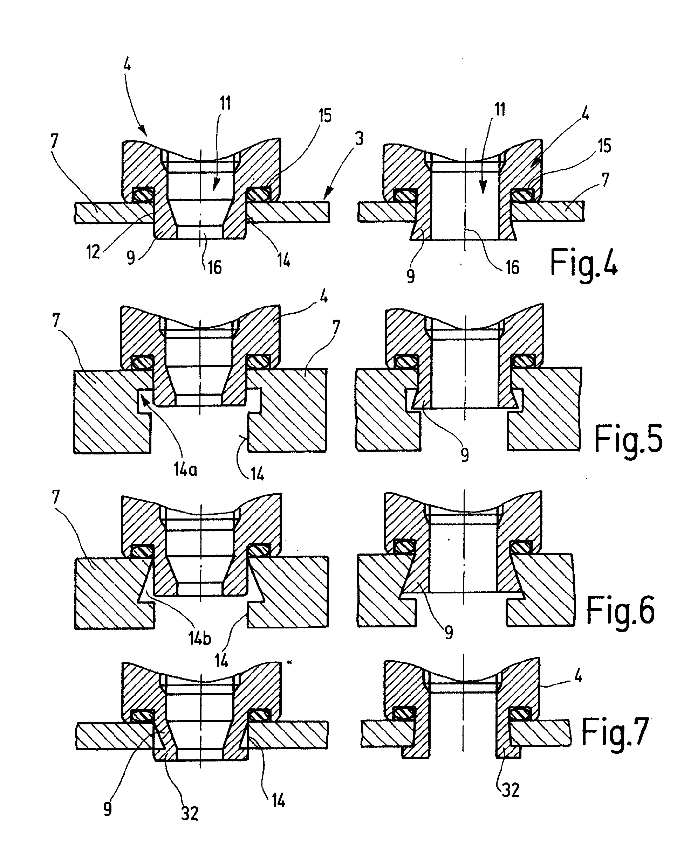

In Figur 1 ist eine Rohranschlusseinrichtung 1 veranschaulicht, die zum Anschluss einer Leitung 2 an ein fluidführendes Rohr 3 dient. Zu der Rohranschlusseinrichtung 1 gehören ein Anschlussstutzen 4 und ein Halter 5, der auf der Wandung des Rohrs 3 sitzt. Die Rohranschlusseinrichtung 1 ist nochmals in Figur 2 ungefähr im Maßstab 2:1 veranschaulicht. Der Anschlussstutzen 2 sitzt an einem abgeplatteten Bereich 6 der Rohrwandung 7 des Rohrs 3. Zur Verbindung des Anschlussstutzens 4 mit dem Rohr 3 dient eine Verbindungseinrichtung 8 in Form eines rohrförmigen Fortsatzes 9, der gesondert aus Figur 4 ersichtlich ist. Der Fortsatz 9 weist einen in längsdurchsetzenden Fluidkanal 11 auf, der, wie Figur 4 links veranschaulicht, sich zunächst zu dem freien Ende des Fortsatzes 9 hin verjüngt. Außen weist der Fortsatz 9 eine zylindrische Mantelfläche 12 auf, so dass der Fortsatz 9 ohne Weiteres durch eine passende Anschlussöffnung 14 geführt werden kann, die in der Rohrwandung 7 ausgebildet ist.

Zur Abdichtung der Verbindung kann eine den Fortsatz 9 umgebende Ringnut 15 vorgesehen sein, in der ein O-Ring sitzt. Ansonsten kann die den Fortsatz 9 umgebende Ringoder Stirnfläche des Anschlussstutzens 4 an der Rohrwandung 7 anliegen.

Die Verbindung zwischen dem Anschlussstutzen 4 und dem Rohr 3 bzw. seiner Rohrwandung 7 erfolgt durch Aufweiten des Fortsatzes 9, beispielsweise indem ein entsprechender Stempel durch den Fluidkanal 11 gestoßen wird. Entsprechend hintergreift der aufgeweitete Fortsatz 9 dann die Rohrwandung 7 und ist somit in seiner Axialrichtung 16 fest an dem Rohr 3 gehalten.

Der Halter 5, der insbesondere aus Figur 2 ersichtlich ist, weist zwei sich von einem gemeinsamen Verbindungsbereich 17 weg erstreckender Halteschenkel 18, 19 auf, die zwischeneinander einen Aufnahmeraum 21 für das Rohr 3 definieren. Die beiden Halteschenkel 18, 19 erstrecken sich dabei im Wesentlichen im rechten Winkel von dem Verbindungsbereich 17 weg. Ihre Innenflächen folgen der zylindrischen Krümmung der Außenseite des Rohrs 3. Die Länge jedes Schenkels 18, 19 ist größer als der Radius des Aufnahmeraums 21, so dass die Schenkel 18, 19, wie aus Figur 2 ersichtlich, unter der Mitte des Rohrs 3 enden.

An ihren freien Enden 22, 23 sind die Halteschenkel 18, 19 mit Rastvorsprüngen 24, 25 versehen, die als Haltemittel dienen. Die Rastvorsprünge 24, 25 sind als Rippen ausgebildet, die sich parallel zu dem Rohr 3 erstrecken. Sie weisen an ihrer dem Rohr 3 zugewandten Seite eine Schneidkante auf. An die Schneidkante schließt sich an der von dem jeweiligen freien Ende 22, 23 abgewandten Seite eine Haltefläche 26, 27 an. Die Halteflächen 26, 27 sind in einer gemeinsamen Ebene E angeordnet, die unterhalb der Rohrmitte des Rohrs 3 gedacht ist. An die Schneidkanten schließen sich jeweils zu dem freien Ende 22, 23 hinführend Rastflächen 28, 29 an, die mit den Halteflächen 26, 27 jeweils einen spitzen Winkel α einschließen, der sich jeweils nach außen öffnet und dessen Scheitel die Schneidkante ist. Anstelle der Schneidkanten können auch voneinander beabstandete, z.B. in einer Reihe angeordnete Spitzen oder andere Elemente vorgesehen werden, die sich in die Oberfläche des Rohrs 3 eingraben.

Der Halter 5, der beispielsweise als Kunststoffspritzteil ausgebildet ist, ist insgesamt etwas federnd nachgiebig, so dass er rastend über das Rohr 3 geschoben werden kann.

In dem Verbindungsbereich 17 ist eine Lageröffnung 31 vorgesehen, die zur Aufnahme des Anschlussstutzens 4 dient. Die Lageröffnung 31, die in Draufsicht z.B. aus Figur 3 ersichtlich ist, kann den gleichen Durchmesser und die gleiche Form wie der Anschlussstutzen 4 aufweisen. Dieser durchragt dann die Lageröffnung 31 und sitzt spielfrei in dieser.

Die insoweit beschriebene Rohranschlusseinrichtung 1 wird wie folgt montiert:

Zur Verbindung eines von dem Rohr 3 umschlossenen Volumens 3a mit einem Fluidkanal 11 wird zunächst die Anschlussöffnung 14 an der Rohrwandung 7 ausgebildet. Im nächsten Schritt wird der Halter 5 so auf das Rohr 3 aufgeschoben, dass die Lageröffnung 31 mit der Anschlussöffnung 14 fluchtet. Das Aufschieben des Halters 5 erfolgt bezüglich des Rohrs 3 in Radialrichtung. Dabei werden die beiden Schenkel 18, 19 so auf das Rohr aufgeschoben, dass das Rohr die beiden Halteschenkel 18, 19 an den Rastflächen 28, 29 berührt und auseinander drückt. Beim weiteren Einschieben wirken die federnd aufgespreizten Rastschenkel 18, 19, sobald sie den Durchmesser des Rohrs 3 passiert haben, als Rastmittel. Sie hintergreifen das Rohr 3. Dabei können sich dann die Schneidkanten der Rastvorsprünge 24, 25 in die Rohraußenhaut einarbeiten.

Ist der Halter 5 auf diese Weise an dem Rohr 3 befestigt, kann der Anschlussstutzen 4 in die Lageröffnung 31 eingesetzt, oder wenn er ein zumindest geringes Übermaß aufweist, eingepresst werden, bis er mit seiner Stirnfläche an der Rohrwandung 7 aufsetzt. Durch Einführen eines geeigneten Stempels in den Fluidkanal 11 wird der Fortsatz 9 nun aufgeweitet, wie es in Figur 4 rechts veranschaulicht ist. Auf diese Weise ist der Anschlussstutzen 4 fest an dem Rohr 3 gehalten. Der Halter 5 stützt den Anschlussstutzen 4 gegen alle seitlichen Belastungen ab.

Alternativ ist es möglich, den Halter 5 vor der Ausbildung der Anschlussöffnung 14 an dem Rohr 3 zu befestigen. Im nächsten Arbeitsschritt wird durch die Lageröffnung 31 hindurch mittels eines Stempels ein Teil der Rohrwandung 17 abgeflacht, um eine Dichtfläche für den in der Ringnut 15 sitzenden O-Ring oder ein anderweitiges Dichtelement auszubilden. Im nächsten Schritt kann mit einem Schneidstempel oder einem Bohrer die Anschlussöffnung 14 ausgebildet werden. Im Anschluss kann der Anschlussstutzen 4 in die Lageröffnung 31 eingesetzt und, wie oben ausgeführt, mit der Rohrwandung 7 verbunden werden.

Die Figur 5 veranschaulicht die Verbindung des Anschlussstutzens 4 mit einer Rohrwandung 7 deren Dicke die Länge des Fortsatzes 9 übersteigt. Zur Befestigung des Anschlussstutzens 4 an der Rohrwandung 7 gemäß Figur 5 ist die Anschlussöffnung 14 mit einer Ringnut 14a versehen. Diese kann, wie Figur 6 veranschaulicht, auch einen dreieckförmigen Querschnitt aufweisen, beispielsweise um eine flächige Anlage der Außenumfangsfläche des Fortsatzes 9 und dem entsprechenden Wandungsbereich 14b der Anschlussöffnung 14 zu ermöglichen.

Figur 7 veranschaulicht eine weitere mögliche Ausbildung des Fortsatzes 9. In dieser Ausführungsform ist der Fortsatz 9 an seinem freien Ende mit einem Ringflansch 32 versehen, dessen Außendurchmesser etwas geringer ist als der Durchmesser der Anschlussöffnung 14.

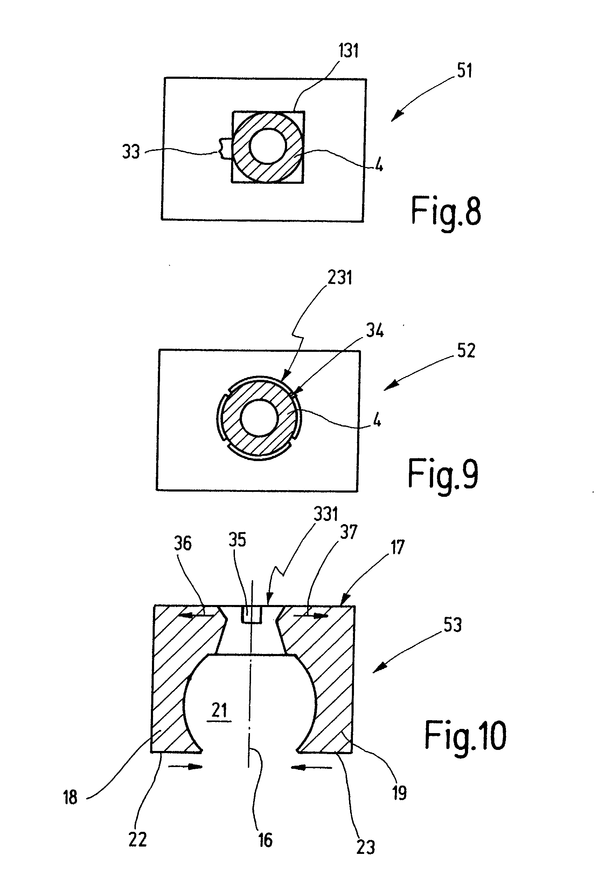

Figur 8 veranschaulicht eine abgewandelte Ausführungsform des Halters 5. Die Lageröffnung 131 ist hier in einer Form ausgebildet, die deutlich von der Querschnittsform des Anschlussstutzens 4 abweicht. Die Lageröffnung 131 ist im Querschnitt quadratisch ausgebildet, wobei die Kantenlänge des Quadrats etwas geringer ist als der Durchmesser des zylindrischen Anschlussstutzens 4. Dieser sitzt demzufolge im Presssitz in der Anschlussöffnung 131, wobei Wandungsberührung nur im Bereich streifenförmiger Anlageflächen 33 vorhanden ist. Die hier auftretende große Flächenpressung ermöglicht eine gewisse Deformation des aus Kunststoff bestehenden Halters 5 in diesen Flächenbereichen 33 und somit ungeachtet aller Produktionstoleranzen einerseits die Ausbildung eines sicheren Presssitzes und andererseits das Einpressen des Anschlussstutzens 4 in die Lageröffnung 31 mit nicht zu großen Presskräften.

Der Halter 5 stützt den Anschlussstutzen 4 in allen Seitenrichtungen ab und entlastet somit die Verbindung des Fortsatzes 9 mit dem Rohr 3.

Eine weitere Ausführungsform des Halters 5 ist in Figur 9 als Halter 52 veranschaulicht. Dieser Halter 52 unterscheidet sich von den anderen Haltern durch die Form der Lageröffnung 231. Diese ist im Wesentlichen zylindrisch ausgebildet. Jedoch weist sie in Längsrichtung verlaufende Rippen auf, die einen Innendurchmesser definieren, der kleiner ist als der Außendurchmesser des Anschlussstutzens 4. Die Rippen 34 sind z.B. dreieckförmig oder trapezförmig ausgebildet. Sie sind außerdem deformierbar und sichern den Presssitz zwischen dem Anschlussstutzen 4 und dem Halter 52. Im Ausführungsbeispiel sind vier Rippen 34 veranschaulicht. Es können jedoch auch, je nach Bedarf mehr oder weniger, mindestens aber drei Rippen vorgesehen sein.

Eine weitere Ausführungsform des Halters ist in Figur 10 als Halter 53 veranschaulicht. Dieser Halter 53 weist an der Wandung seiner Anschlussöffnung 331 Rippen auf, die einen sich entlang der Axialrichtung 16 ändernden Innendurchmesser festlegen. Die engste Stelle liegt dabei im oberen Drittel der Lageröffnung 331. In diesem Bereich ist der Innendurchmesser wesentlich geringer als der Außendurchmesser des Anschlussstutzens 4. Außerdem können zu Erhöhung der Biegeelastizität des Verbindungsbereichs 17 in Axialrichtung vor und hinter der Lageröffnung 331 Nuten oder Einkerbungen 35 vorgesehen sein, die ein Aufweiten der Lageröffnung 331 in Richtung der in Figur 10 eingetragenen Pfeile 36, 37 gestatten. Eine solche Aufweitung bewirkt eine Gegenbewegung der freien Enden 22, 23 der Halteschenkel 18, 19 aufeinander zu in Richtung der Pfeile 38, 39. Dies kann dazu genutzt werden, eine feste Umklammerung des Rohrs 3 durch die Schenkel 18, 19 zu bewirken, wenn der Anschlussstutzen 4 in die Lageröffnung 331 eingeschoben wird.

Außerdem ist es alternativ möglich, die Halteschenkel 18, 19 anderweitig, beispielsweise mittels klebstoff- oder haftstoff- oder anderweitig stoffschlüssig an dem Rohr 3 zu befestigen.

Die erfindungsgemäße Rohranschlusseinrichtung 1 weist einen an einem Rohr 3 anzubringenden Anschlussstutzen 4 auf. Der Anschlussstutzen 4 durchsetzt eine Lageröffnung 31 die in einem Halter 5 ausgebildet ist. Der Halter 5 ist mittels zweier Halteschenkel 18, 19 mit dem Rohr 3 verbunden und dient dazu, die Verbindung zwischen dem Anschlussstutzen 4 und dem Rohr 3 insbesondere hinsichtlich aller quer zu dem Anschlussstutzen 4 angreifenden Kräfte zu entlasten.

Eine solche Rohranschlusseinrichtung 1 ist vielseitig anwendbar. Insbesondere ist sie auch dann anwendbar, wenn die so verbundenen Rohre oder Leitungen mechanisch bewegt werden oder anderweitigen mechanischen Belastungen unterliegen.

## Patentansprüche

1. Rohranschlusseinrichtung (1), insbesondere zum Anschluss einer Leitung (2) an ein Fluid führendes Rohr (3),
mit einem Anschlussstutzen (4), der einen Fluidkanal (11) und eine Verbindungseinrichtung (8) zur Verbindung des Anschlussstutzens (4) mit einer Rohrwandung (7) aufweist, die ein Fluid führendes Volumen umschließt, und
mit einem Halter (5), der zwei Halteschenkel (18, 19) aufweist, die zwischen einander einen Aufnahmeraum (21) zur Aufnahme des Rohrs (3) definieren und an ihren freien Enden (22, 23) mit Haltemitteln (24, 25) versehen sind und die an einem Verbindungsstück (17) gehalten sind, das eine Lageröffnung (31) für den Anschlussstutzen (4) aufweist.

2. Rohranschlusseinrichtung nach Anspruch 1, **dadurch gekennzeichnet, dass** die Halteschenkel (18, 19) an ihren Enden als Haltemittel dienende Rastmittel (24, 25) aufweisen.

3. Rohranschlusseinrichtung nach Anspruch 1, **dadurch gekennzeichnet, dass** das Haltemittel ein stoffschlüssiges Haltemittel ist.

4. Rohranschlusseinrichtung nach Anspruch 1, **dadurch gekennzeichnet, dass** die Rastschenkel (18, 19) federnd ausgebildet sind.

5. Rohranschlusseinrichtung nach Anspruch 1, **dadurch gekennzeichnet, dass** die Rastmittel (24, 25) Schneidkanten aufweisen.

6. Rohranschlusseinrichtung nach Anspruch 1, **dadurch gekennzeichnet, dass** die Rastschenkel (18, 19) eine Länge aufweisen, die größer ist als der Radius des Aufnahmeraums (21).

7. der Rohranschlusseinrichtung nach Anspruch 1, **dadurch gekennzeichnet, dass** die Lageröffnung (31) den gleichen Querschnitt aufweist, wie der Anschlussstutzen (4).

8. Rohranschlusseinrichtung nach Anspruch 1, **dadurch gekennzeichnet, dass** die Lageröffnung (31) zylindrisch ausgebildet ist.

9. Rohranschlusseinrichtung nach Anspruch 1, **dadurch gekennzeichnet, dass** die Größe des Querschnitts der Lageröffnung (31) mit dem der Größe des Querschnitts des Anschlussstutzens (4) übereinstimmt.

10. Rohranschlusseinrichtung nach Anspruch 1, **dadurch gekennzeichnet, dass** die Lageröffnung (131, 231, 331) einen Querschnitt aufweist, der von dem Querschnitt des Anschlussstutzens (4) abweicht.

11. Rohranschlusseinrichtung nach Anspruch 1, **dadurch gekennzeichnet, dass** der Anschlussstutzen (4) in der Lageröffnung (31, 131, 231, 331) im Presssitz gehalten ist.

12. Rohranschlusseinrichtung nach Anspruch 1, **dadurch gekennzeichnet, dass** der Halter (5) aus einem deformierbaren Material ausgebildet ist.

13. Rohranschlusseinrichtung nach Anspruch 1, **dadurch gekennzeichnet, dass** der Anschlussstutzen (4) einen radial aufspreizbaren rohrförmigen Fortsatz (9) zur Befestigung an der Rohrwandung (7) aufweist.

14. Verfahren zum Anschließen einer Leitung an ein Rohr mit folgenden Schritten:
Anbringen eines Halters nach einem der vorgehenden Ansprüche an dem Rohr
Ausbilden einer Anschlussöffnung an der Rohrwandung, an einer Stelle, die mit der Lageröffnung des Stützclips fluchtet,
Einpressen des Anschlussstutzens in die Lageröffnung,
Verbinden des Anschlussstutzens mit der Rohrwand.

15. Verfahren nach Anspruch 14, **dadurch gekennzeichnet, dass** die Anschlussöffnung vor dem Anbringen des Halters ausgebildet wird.

16. Verfahren nach Anspruch 14, **dadurch gekennzeichnet, dass** der Anschlussstutzen nach dem Einpressen in die Lageröffnung mit der Rohrwand verbunden wird.
